# EUROPEAN PATENT APPLICATION

(11) **EP 2 362 702 A1**
(43) Date of publication of application: **31.08.2011**
(21) Application number: 11000999.0
(22) Date of filing: 08.02.2011
(51) Int. Cl.: H04W 64/00, G01S 5/02, H04W 4/02, H04W 84/12

(54) **A method and system for physical mapassisted wireless access point locating**

(30) Priority: 12.02.2010 US 304193 P; 22.03.2010 US 729197
(71) Applicant: Broadcom Corporation, Irvine, CA 92617 (US)
(72) Inventor: Garrett, David, Tustin, CA 92782 (US); Buer, Mark, Gilbert, AZ 85296 (US); Lundgren, David Albert, Mill Valley, CA 94941 (US); Abraham, Charles, Los Gatos, CA 95033 (US); Karaguz, Jeyhan, Irvine, CA 92606 (US); Murray, David, Mission Viejo, CA 92692 (US)
(74) Representative: Jehle, Volker Armin

(57) **Abstract**

A mobile device receives a server-assisted location for a wireless access point, either a WiFi access point or a Bluetooth access point, from a remote location server comprising a reference database. The received server-assisted location is refined using a physical map or image. The mobile device is operable to acquire the physical map or image for a map-assisted location for the wireless access point. The mobile device compares the two locations to generate a valid location for the wireless access point. In instances where the two locations are consistent, the mobile device utilizes one of the two locations as the valid location for the wireless access point. Otherwise, the mobile device refines the server-assisted location utilizing the map-assisted location. The resulting refined server-assisted location is utilized as the valid location for the wireless access point and is transmitted to the remote location server to refine the reference database.

## Description

### CROSS-REFERENCE TO RELATED APPLICATIONS/INCORPORATION BY

### REFERENCE

This patent application makes reference to, claims priority to and claims the benefit from United States Provisional Patent Application Serial No. 61/304,193 filed on February 12, 2010.

This application also makes reference to:
United States Application Serial No. 12/729,184 filed on March 22, 2010; and
United States Application Serial No. _________ (Attorney Docket No. 21023US02) filed on even date herewith.

Each of the above stated applications is hereby incorporated herein by reference in its entirety.

### FIELD OF THE INVENTION

Certain embodiments of the invention relate to communication systems. More specifically, certain embodiments of the invention relate to a method and system for physical map-assisted wireless access point locating.

### BACKGROUND OF THE INVENTION

Location-based services (LBS) are emerging as a new type of value-added service provided by mobile communication network. LBS are mobile services in which the user location information is used in order to enable various LBS applications such as, for example, enhanced 911 (E-911), location-based 411, location-based messaging and/or location-based friend finding services. A location of a mobile device may be determined in different ways such as, for example, using network-based technology, using terminal-based technology, and/or hybrid technology, which is a combination of the former technologies. Many positioning technologies such as, for example, Time of Arrival (TOA), Observed Time Difference of Arrival (OTDOA), Enhanced Observed Time Difference (E-OTD) as well as the Global navigation satellite-based systems (GNSS) such as GPS, GLONASS, Galileo, and/or Assisted-GNSS (A-GNSS), may be utilized to estimate the location (latitude and longitude) of the mobile device and convert it into a meaningful X, Y coordinate for LBS applications. A-GNSS technology combines satellite positioning and communication networks such as mobile networks to reach performance levels allowing the wide deployment of Location-Based Services.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for physical map-assisted wireless access point locating, substantially as shown in and/or described in connection with at least one of the figures, as set forth more completely in the claims.

According to an aspect, a method for communication is provided, the method comprising:
performing by one or more processors and/or circuits in a mobile device:
   receiving a server-assisted location for a wireless access point from a remote location server comprising a reference database; and
   refining said received server-assisted location for said wireless access point utilizing a physical map or image.

Advantageously, said wireless access point is a WiFi access point or a Bluetooth access point.

Advantageously, the method further comprises acquiring said physical map or image for a map-assisted location for said wireless access point.

Advantageously, the method further comprises generating a valid location for said wireless access point based on said received server-assisted location and said map-assisted location.

Advantageously, the method further comprises comparing said map-assisted location with said received server-assisted location for said generation.

Advantageously, said server-assisted location or said map-assisted location is utilized as said valid location for said wireless access point based on said comparison.

Advantageously, the method further comprises refining said received server-assisted location utilizing said acquired map-assisted location for said wireless access point based on said comparison.

Advantageously, said refined server-assisted location is utilized as said valid location for said wireless access point.

Advantageously, the method further comprises transmitting said refined server-assisted location for said wireless access point to said remote location server.

Advantageously, said remote location server updates said reference database utilizing said received refined server-assisted location for said wireless access point.

According to an aspect, a system for communication comprises:
one or more processors and/or circuits for use in a mobile device, said one or more processors and/or circuits being operable to:
   receive a server-assisted location for a wireless access point from a remote location server comprising a reference database; and
   refine said received server-assisted location for said wireless access point utilizing a physical map or image.

Advantageously, said wireless access point is a WiFi access point or a Bluetooth access point.

Advantageously, said one or more processors and/or circuits are operable to acquire said physical map or image for a map-assisted location for said wireless access point.

Advantageously, said one or more processors and/or circuits are operable to generate a valid location for said wireless access point based on said received server-assisted location and said map-assisted location.

Advantageously, said one or more processors and/or circuits are operable to compare said map-assisted location with said received server-assisted location for said generation.

Advantageously, said server-assisted location or said map-assisted location is utilized as said valid location for said wireless access point based on said comparison.

Advantageously, said one or more processors and/or circuits are operable to refine said received server-assisted location utilizing said acquired map-assisted location for said wireless access point based on said comparison.

Advantageously, refined server-assisted location is utilized as said valid location for said wireless access point.

Advantageously, said one or more processors and/or circuits are operable to transmit said refined server-assisted location for said wireless access point to said remote location server.

Advantageously, said remote location server updates said reference database utilizing said received refined server-assisted location for said wireless access point.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to refine the location of a wireless access point using a physical map or image, in accordance with an embodiment of the invention.

FIG. 2 is a block diagram illustrating an exemplary mobile device that is operable to refine a server-assisted location for a wireless access point utilizing a physical map or image, in accordance with an embodiment of the invention.

FIG. 3 is a block diagram illustrating an exemplary location server that is operable to refine a reference database based on a physical map or image, in accordance with an embodiment of the invention.

FIG. 4 is a flow chart illustrating an exemplary procedure that is utilized by a mobile device to refine a server-assisted location of a wireless access point utilizing a physical map or image, in accordance with an embodiment of the invention.

FIG. 5 is a flow chart illustrating an exemplary procedure that is utilized by a location server to refine a server-assisted location of a wireless access point utilizing a physical map or image, in accordance with an embodiment of the invention.

### DETAILED DESCRIPTION OF THE INVENTION

Certain embodiments of the invention may be found in a method and system for physical map-assisted wireless access point locating. In various embodiments of the invention, a mobile device may be operable to receive a server-assisted location for a wireless access point from a remote location server, which comprises a reference database to track location information of associated communication devices. The mobile device may be configured to refine the received server-assisted location for the wireless access point using a physical map or image comprising various details such as natural land marks and/or characteristics of objects within a geographic area. The wireless access point may connect the mobile device with, for example, the Internet using WiFi or Bluetooth technologies. In this regard, the mobile device may be operable to acquire the physical map or image from, for example, the Internet for a map-assisted location for the wireless access point. A valid location for the wireless access point may be generated based on the received server-assisted location and the map-assisted location. The mobile device may compare the map-assisted location with received server-assisted location for consistency. In instances where the received server-assisted location is consistent with the map-assisted location for the wireless access point, the mobile device may utilize either the received server-assisted location or the map-assisted location as the valid location for the wireless access point. Otherwise, the mobile device may be configured to refine the server-assisted location utilizing the map-assisted location. The resulting refined server-assisted location may be utilized as the valid location for the wireless access point. In addition, the mobile device may be operable to transmit the refined server-assisted location for the wireless access point to the remote location server so as to refine or update location information of the wireless access point in the associated reference database.

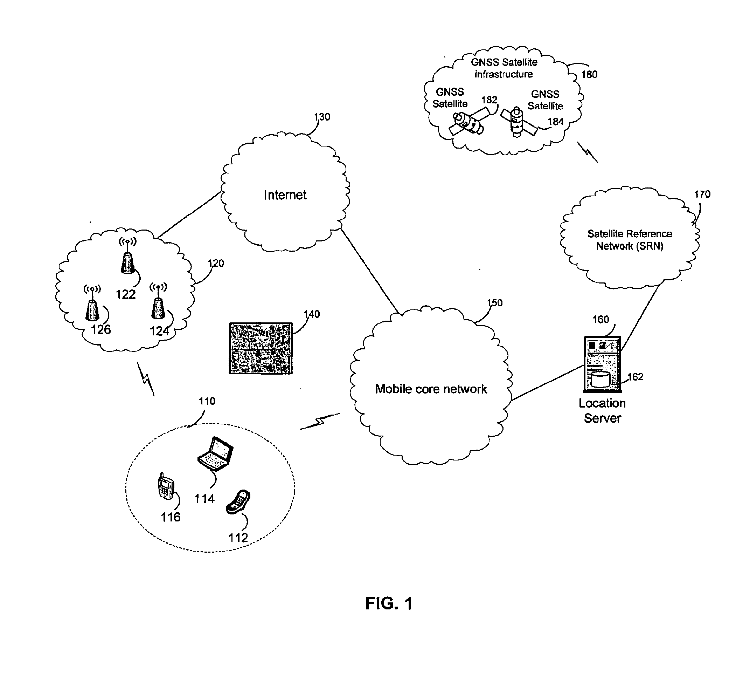

FIG. 1 is a diagram illustrating an exemplary communication system that is operable to refine the location of a wireless access point using a physical map or image, in accordance with an embodiment of the invention. Referring to FIG. 1, there is shown a communication system 100. The communication system 100 comprises a plurality of mobile devices 110, of which mobile devices 112-116 are illustrated, a plurality of wireless access points 120 such as wireless access points 122-126, an Internet 130, a physical map or image 140, a mobile core network 150, a location server 160 comprising a reference database 162, a satellite reference network (SRN) 170 and a Global Navigation Satellite Systems (GNSS) satellite infrastructure 180. The satellite infrastructure 180 comprises a plurality of GNSS satellites, of which GNSS satellites 182-184 are illustrated.

A mobile device such as the mobile device 112 may comprise suitable logic, circuitry, interfaces and/or code that are operable to receive services provided by the Internet 130 and/or the mobile core network 150. For example, the mobile device 112 may be operable to access to the Internet 130 via a wireless access point such as the wireless access point 122 utilizing, for example, Wi-Fi and/or Bluetooth technologies. Depending on device capabilities, the mobile device 112 may be operable to communicate with the mobile core network 150 using, for example, CDMA, GSM, UMTS, LTE and WiMAX access technologies.

The mobile device 112 may be operable to capture or identify encountered wireless access points located in a specific geographic area. In instances where the mobile device 112 may need the location of an identified wireless point such as the wireless access point 122 for LBS applications, the mobile device 112 may be operable to acquire the location of the wireless access point 122 from various resources such as the location server 160 and/or the Internet 130. For example, the mobile device 112 may be operable to utilize A-GNSS data received from the location server 160 to determine the location of the wireless access point 122. The mobile device 112 may also be operable to identify the location of the wireless access point 122 in the physical map or image 140 provided by the Internet 130, TV broadcasting, and/or FM broadcasting, for example. The physical map or image 140 may also be a cashed copy in the mobile device 112. The mobile device 112 may be configured to compare the two locations, namely, a map-assisted location and a server-assisted location, to determine a valid location for the wireless access point 122. In this regard, in instances where the server-assisted location and the map-assisted location may be consistent, the mobile device 112 may select either the server-assisted location or the map-assisted location as the valid location for the wireless access point 122 to support LBS applications. In instances where the server-assisted location and the map-assisted location may be inconsistent, the mobile device 112 may be operable to revise or update the server-assisted location utilizing the map-assisted location and/or some user experience related information such as, for example, knowledge of a recent geographic area where the mobile device 112 encountered. The resulting revised server-assisted location may be utilized by the mobile device 112 as the valid location for the wireless access point 122 to enhance LBS performance. Furthermore, the mobile device 112 may be operable to transmit the refined server-assisted location to the location server 160 so as to refine corresponding location information of the wireless access point 122 in the reference database 162.

A wireless access point such as the wireless access point 122 may comprise suitable logic, circuitry, interfaces and/or code that are operable to connect wireless communication devices to a wireless or wired network using Wi-Fi, Bluetooth or related standards. The wireless access point 122 may be configured to function as a central transmitter and receiver of a wireless local network (WLAN). The wireless access point 122 may be operable to provide data services such as LBS applications to wireless LAN enabled communication devices, for example, the mobile devices 112-116, using wireless LAN technology. In this regard, the location of the wireless access point 122 may be required for LBS applications such as location based access control. The location of the wireless access point 122 may be presented in the physical map or image 140 and/or may be tracked in the reference database 162 via the location server 160.

The Internet 130 may comprise suitable logic, circuitry, interfaces and/or code that are operable to support data communication using Internet Protocols (IP). The Internet 130 may deliver various data services, for example, an Internet Map Service (IMS), to users allowing users to view, for example, the physical map or image 140. Specifically, the Internet 130 may be configured to enable users to identify objects presented in the physical map or image 140 and view corresponding locations using IMS.

The mobile core network 150 may comprise suitable logic, circuitry, interfaces and/or code that are operable to interface various access networks such as, for example, a CDMA network, a UMTS network and/or a WiMAX network, with external data networks such as packet data networks (PDNs) and/or the Internet 130. The mobile core network 150 may be configured to communicate various data services, which are provided by external data networks, to associated users such as, for example, the mobile devices 112-116. In instances where a LBS application is provided to a user such as the mobile device 112, the mobile core network 150 may be operable to communicate with the location server 160 for location information required for the LBS application.

The location server 160 may comprise suitable logic, circuitry, interfaces and/or code that are operable to access the satellite reference network (SRN) 170 to collect GNSS satellite data by tracking GNSS constellations through the SRN 170. The location server 160 may be operable to utilize the collected GNSS satellite data to generate GNSS assistance data (A-GNSS data) comprising, for example, ephemeris data, LTO data, reference positions and/or time information. The location server 160 may be operable to collect and/or retrieve location information from associated users such as the wireless access points 122-126 and/or the mobile devices 112-116. For example, the location server 160 may be operable to retrieve and/or track location information of the wireless access point 122 from the mobile devices 112-114. The retrieved location of the wireless access point 122 may be stored in the reference database 162 so that it may be shared among associated mobile devices such as the mobile device 116. The location server 160 may be operable to communicate the stored location of the wireless access point 122 as A-GNSS data to the mobile device 116, when need. In this regard, the location server 160 may be operable to determine a server-assisted location for the wireless access point 122 utilizing the reference database 162. The location server 160 may also be operable to identify a map-assisted location for the wireless access point 122 via, for example, the physical map or image 140. The location server 160 may validate the server-assisted location utilizing the identified map-assisted location for the wireless access point 122. In instances where the server-assisted location and the map-assisted location are consistent, the location server 160 may select either the server-assisted location or the map-assisted location as a valid location for the wireless access point 122 to share among associated mobile devices such as the mobile device 116. In instances where the server-assisted location and the map-assisted location are inconsistent, the location server 160 may be operable to revise or update the server-assisted location utilizing the map-assisted location and/or some user experience related information such as, for example, knowledge of a recent geographic area where the mobile device 116 encountered. The resulting revised server-assisted location may be utilized by the location server 160 as a valid location for the wireless access point 122 to support LBS applications. The refined server-assisted location may be utilized to refine corresponding location information of the wireless access point 122 in the reference database 162. The reference database 162 may be refined or updated using the retrieved location information.

The SRN 170 may comprise suitable logic, circuitry, interfaces and/or code that are operable to collect and/or distribute data for GNSS satellites on a continuous basis. The SRN 170 may comprise a plurality of GNSS reference tracking stations located around the world to provide A-GNSS coverage all the time in both a home network and/or any visited network.

The GNSS satellites 182-184 may comprise suitable logic, circuitry, interfaces and/or code that may be operable to generate and broadcast satellite navigational information. The broadcast satellite navigational information may be collected by the SRN 170 to be utilized by the location server 160 to enhance LBS performance. The GNSS satellites 182-184 may comprise GPS, Galileo, and/or GLONASS satellites.

In an exemplary operation, a mobile device such as the mobile device 112 may be operable to identify an encountered wireless access point, for example, the wireless access point 122, located in a geographic area of interest. The mobile device 112 may be operable to send a request to the location server 160 for location information of the identified wireless access point (the wireless access point 122). In response, the location server 160 may determine the location for the wireless access point 122 using the reference database 162. The determined location, namely, a server-based location, for the wireless access point 122 may be transmitted as A-GNSS data to the mobile device 112 via the mobile core network 160. The mobile device 112 may have access to the physical map or image 140 provided by, for example, the Internet 130 or a cached copy in the mobile device 112. The physical map or image 140 may comprise location information of the wireless access point 122, namely, a map-assisted location. In instances where the server-assisted location and the map-assisted location for the wireless access point 122 may be consistent, the mobile device 112 may be operable to select either the map-assisted location or the server-assisted location as a valid location for the wireless access point 122, which may be utilized to support LBS applications such as location-based access control. Otherwise, the mobile device 112 may be configured to refine the server-assisted location using the map-assisted location and/or user experiences such as a recent encountered geographic area. The refined server-based location may be used as a valid location for the wireless access point 122 so as to improve LBS performance. In addition, the mobile device 112 may be operable to transmit the refined server-assisted location for the wireless access point 122 to the location server 160 so as to refine the reference database 162.

In an exemplary operation, the location server 160 may be operable to provide location information of the wireless access point 122 to the mobile devices 112-114 whenever needed. A server-assisted location for the wireless access point 122 may be determined utilizing the reference database 162. The server-assisted location may be validated utilizing other resources such as the physical map or image 140. In this regard, the location server 160 may be operable to identify a map-assisted location for the wireless access point 122 in the physical map or image 140. The location server 160 may compare the server-assisted location with the map-assisted location for the wireless access point 122. In instances where the server-assisted location and the map-assisted location are consistent, either the server-assisted location or the map-assisted location may be selected as a valid location for the wireless access point 122. Otherwise, the location server 160 may revise or update the server-assisted location utilizing the map-assisted location and/or some user experience related information such as, for example, knowledge of a recent geographic area for the wireless access point 122. The location server 160 may utilize the resulting revised server-assisted location as a valid location for the wireless access point 122 to support LBS applications and to refine the reference database 162.

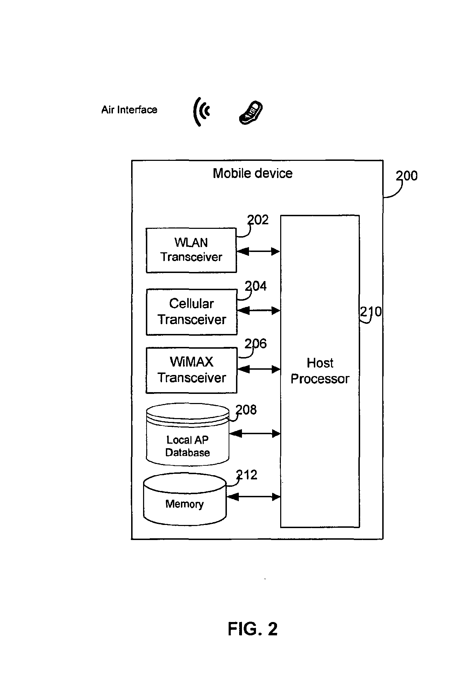

FIG. 2 is a block diagram illustrating an exemplary mobile device that is operable to refine a server-assisted location for a wireless access point utilizing a physical map or image, in accordance with an embodiment of the invention. Referring to FIG. 2, there is shown a mobile device 200. The mobile device 200 comprises a WLAN transceiver 202, a cellular transceiver 204, a WiMAX transceiver 206, a local access point database 208, a host processor 210 and a memory 212.

The WLAN transceiver 202 may comprise suitable logic, circuitry, interfaces and/or code that may be operable to receive and/or transmit radio frequency signals using wireless LAN technology. The WLAN transceiver 202 may be operable to receive various data services such as an IMS provided by the Internet 130 over a WLAN connection with, for example, the wireless access point 122. The WLAN transceiver 202 may be configured to allow users to view, for example, the physical map or image 140 through the IMS.

The cellular transceiver 204 may comprise suitable logic, circuitry, interfaces and/or code that may be operable to communicate with the mobile core network 150 using various cellular access technologies such as CDMA, GSM, UMTS and/or LTE. The cellular transceiver 204 may receive various data services such as LBS applications provided by the mobile core network 150. The cellular transceiver 204 may be operable to communicate with the location server 160 for location information such as the location of the wireless access point 122 to support LBS application dedicated to the mobile device 200. The cellular transceiver 204 may be configured to provide refined location information to the location server 160 so as to update the reference database 162.

The WiMAX transceiver 206 may comprise suitable logic, circuitry, interfaces and/or code that may be operable to communicate with the mobile core network 150 using WiMAX access technology. The WiMAX transceiver 206 may receive various data services such as LBS applications provided by the mobile core network 150. The WiMAX transceiver 206 may be operable to communicate with the location server 160 for location information such as the location of the wireless access point 122 to support LBS application dedicated to the mobile device 200. The WiMAX transceiver 206 may be configured to provide refined location information to the location server 160 so as to update the reference database 162.

The local access point (AP) database 208 may comprise suitable logic, circuitry, interfaces and/or code that may be operable to manage and store data comprising location information of wireless access points that the mobile device 200 encounters. The contents of the local AP database 208 may provide valid location information for the encountered wireless access points. The local AP database 208 may be updated or refined as a needed basis, periodically or aperiodically.

The host processor 210 may comprise suitable logic, circuitry, interfaces and/or code that may be operable to manage and/or control operations of associated device component units such as the WLAN transceiver 202, the cellular transceiver 204, the WiMAX transceiver 206 and the local AP database 208 depending on usages. For example, the host processor 210 may be operable to activate or deactivate one or more associated radios such as the WLAN transceiver 202 and/or the cellular transceiver 204 as a needed basis to save power. The host processor 210 may be configured to validate information received from difference resources. For example, the host processor 210 may be operable to receive the physical map or image 140 from the Internet 130 over the WLAN transceiver 202. The host processor 210 may generate a map-assisted location for the wireless access point 122 using the received physical map or image 140.

The host processor 210 may also be operable to receive A-GNSS data from the location server 160 over the cellular transceiver 204 and/or the WiMAX transceiver 206. The received A-GNSS data may comprise a server-assisted location for the wireless access point 122. The host processor 210 may be operable to compare the map-assisted location and the server-assisted location in order to determine a valid location for the wireless access point 122. In instances where the map-assisted location and the server-assisted location are consistent, the host processor 210 may select either the map-assisted location or the server-assisted location as a valid location for the wireless access point 122. Otherwise, the host processor 210 may be operable to refine the server-assisted location using the map-assisted location and/or some user experience related information such as, for example, knowledge of a recent geographic area where the mobile device 200 encountered. The refined server-assisted location may be utilized as a valid location of the wireless access point 122 to improve LBS performance. In addition, the host processor 210 may be operable to communicate the refined server-assisted location of the wireless access point 122 to the location server 160 to update location information of the wireless access point in the reference database 162.

The memory 212 may comprise suitable logic, circuitry, interfaces and/or code that may be operable to store information such as executable instructions and data that may be utilized by the host processor 210 and/or other associated device components such as, for example, the WLAN transceiver 202 and the cellular transceiver 204. The memory 212 may comprise RAM, ROM, low latency nonvolatile memory such as flash memory and/or other suitable electronic data storage.

In an exemplary operation, the host processor 210 may be operable to manage and/or control operations of, for example, the WLAN transceiver 202 and the cellular transceiver 204, depending on corresponding usages. The host processor 210 may be operable to validate information received from difference resources. For example, in instances where location information of the wireless access point 122 may be needed for location based access control, various resources such as the Internet 130, FM broadcasting, and/or the location server 160 may be utilized to provide location information of the wireless access point 122 to the mobile device 200. For example, the Internet 130 may be utilized to provide a map-assisted location for the wireless access point to the mobile device 200 using the physical map or image 140. The location server 160 may provide a server-assisted location for the wireless access point 122 to the mobile device 200 using A-GNSS data. The host processor 210 may be operable to compare the map-assisted location and the server-assisted location so as to determine a valid location for the wireless access point 122. In instances where the map-assisted location and the server-assisted location are consistent, the host processor 210 may utilize either the map-assisted location or the server-assisted location as a valid location for the wireless access point 122. Otherwise, the host processor 210 may be configured to refine the server-assisted location using the map-assisted location and/or some user experience related information such as information on a recent geographic area where the mobile device 200 encountered. The resulting refined server-assisted location may be utilized as a valid location for the wireless access point 122. Furthermore, the host processor 210 may be operable to communicate the refined server-assisted location of the wireless access point to the location server 160 to update the reference database 162.

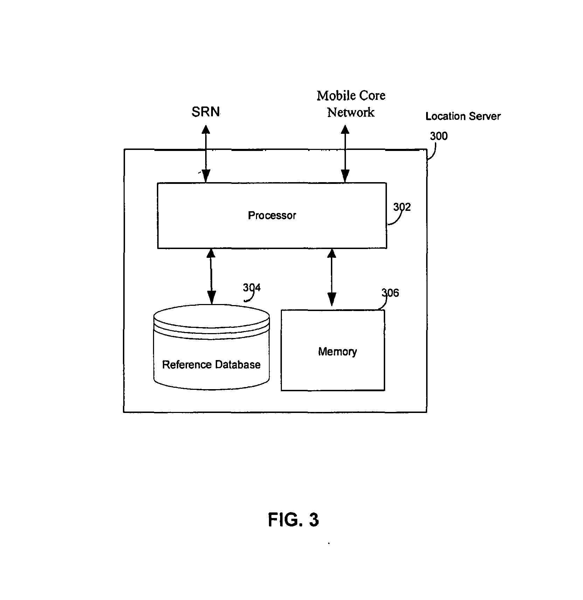

FIG. 3 is a block diagram illustrating an exemplary location server that is operable to refine reference database based on a physical map or image, in accordance with an embodiment of the invention. Referring to FIG. 3, there is shown a location server 300. The location server 300 may comprise a processor 302, a reference database 304 and a memory 306.

The processor 302 may comprise suitable logic, circuitry, interfaces and/or code that may be operable to manage and/or control operations of the reference database 304 and the memory 306. The processor 302 may be operable to communicate with the satellite reference network (SRN) 150 so as to collect GNSS satellite data by tracking GNSS constellations through the SRN 150. The processor 302 may utilize the collected GNSS satellite data to build the reference database 304, which may be coupled internally or externally to the location server 300. The processor 302 may be operable to retrieve or collect location information from associated users such as the mobile device 112-116 and/or the wireless access point 122. The collected location information may be stored in the reference database 304 to share among associated users whenever needed. For example, in instances where the location for the wireless access point 122 is required, the processor 302 may be operable to determine a server-assisted location for the wireless access point 122 utilizing the reference database 304. The processor 302 may validate the server-assisted location utilizing other resources such as the physical map or image 140. In this regard, the processor 302 may be operable to identify a map-assisted location for the wireless access point 122 in the physical map or image 140. The processor 302 may compare the server-assisted location with the map-assisted location for the wireless access point 122. In instances where the server-assisted location and the map-assisted location are consistent, the processor 302 may be operable to select either the server-assisted location or the map-assisted location as a valid location for the wireless access point 122. Otherwise, the processor 302 may revise or update the server-assisted location utilizing the map-assisted location and/or other information such as, for example, knowledge of a recent geographic area for the wireless access point 122. The resulting revised server-assisted location may be utilized as a valid location for the wireless access point 122 to share among associated users and to refine the reference database 304. The processor 302 may be operable to communicate at least a portion of the stored location information with, for example, the mobile device 200 as a needed basis or periodically.

The reference database 304 may comprise suitable logic, circuitry, interfaces and/or code that may be operable to store location information of associated communication devices such as, for example, the wireless access point 122. The stored location information may be provided to associated communication devices such as the mobile device 112 to support LBS applications such as location-based access control. The location database 304 may be operable to manage and update the stored location information when need, aperiodically or periodically.

The memory 306 may comprise suitable logic, circuitry, interfaces and/or code that may be operable to store information such as executable instructions and data that may be utilized by the processor 302 and/or other associated component units such as, for example, the reference database 304. The memory 306 may comprise RAM, ROM, low latency nonvolatile memory such as flash memory and/or other suitable electronic data storage.

In an exemplary operation, the processor 302 may be operable to collect GNSS satellite data through the SRN 150 to build the reference database 304. The processor 302 may also be operable to collect or track location information from a plurality of associated communication devices such as the mobile devices 112-116. The collected GNSS satellite data and/or location information may be utilized to build and/or update the reference database 304. In instances where one or more requests for the location of the wireless access point 122 may be received from, for example, the mobile device 112, the processor 302 may be operable to generate a server-assisted location for the wireless access point 122 using the reference database 304. In this regard, the server-assisted location may be validated utilizing other available resources such as the physical map or image 140. In this regard, the processor 302 may be operable to identify a map-assisted location for the wireless access point 122 in the physical map or image 140. The server-assisted location may be compared with the map-assisted location for the wireless access point 122. In instances where the server-assisted location and the map-assisted location are consistent, the processor 302 may utilize either the server-assisted location or the map-assisted location as a valid location for the wireless access point 122. Otherwise, the processor 302 may revise or update the server-assisted location utilizing the map-assisted location and/or other related information such as, for example, knowledge of a recent geographic area for the wireless access point 122. The processor 302 may communicate the revised server-assisted location for the wireless access point 122 as A-GNSS data to the mobile device 112.

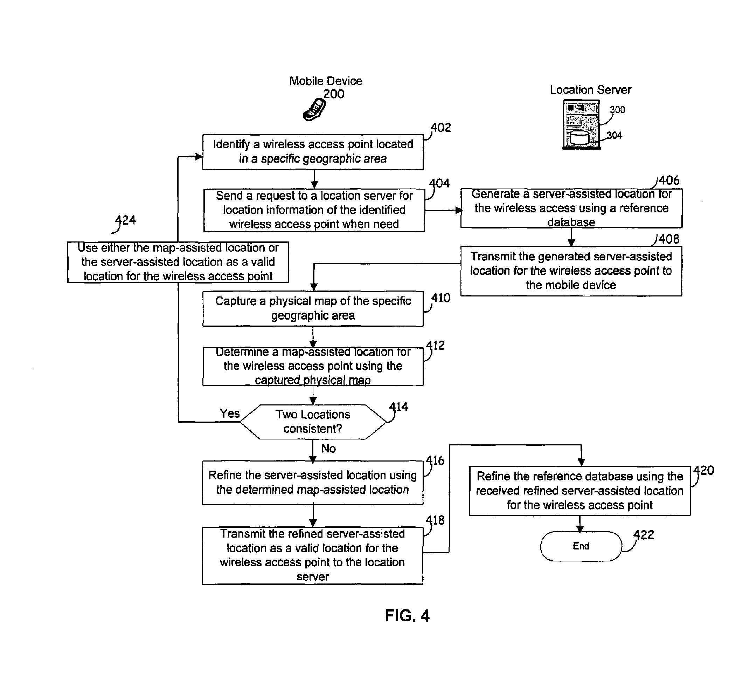

FIG. 4 is a flow chart illustrating an exemplary procedure that is utilized by a mobile device to refine a server-assisted location of a wireless access point utilizing a physical map or image, in accordance with an embodiment of the invention. Referring to FIG. 4, the exemplary steps may start with step 402. In step 402, the mobile device 200 may be operable to identify an encountered wireless access point such as the wireless access point 122 located in a specific geographic area. In step 404, the mobile device 200 may send a request to the location server 160 for location information of the wireless access point 122 when need. For example, in instances where a cached copy of the location information of the wireless access point 122 that the mobile device 200 previously acquired from the location server 160 is available, the mobile device 200 may be operable to utilize the cached copy for a server-assisted location for the wireless access point 122. In step 406, in response, the location server 300 may be operable to generate a server-assisted location for the wireless access 122 using at least a portion of the reference database 304.

In step 408, the location server 300 may be operable to transmit the generated server-assisted location for the wireless access point 122 as A-GNSS data to the mobile device 200. In step 410, the mobile device 200 may be operable to capture the physical map 140 for the specific geographic area from, for example, the Internet 130. In step 412, the host processor 210 of the mobile device 112 may be operable to determine a map-assisted location for the wireless access point 122 using the captured physical map or image 140. In step 414, the mobile device 112 may determine whether the map-assisted location and the server-assisted location are consistent. In instances where the map-assisted location and the server-assisted location for the wireless access point 122 may not be consistent, then in step 416, the mobile device 112 may be configured to refine the server-assisted location using the determined map-assisted location for the wireless access point 122 and/or some user experience related information such as, for example, knowledge of a recent encountered geographic area. The resulting refined server-assisted location may be utilized as a valid location of the wireless access point 122 for LBS applications such as location-based access control. In step 418, the mobile device 112 may be operable to utilize the refined server-assisted location as a valid location for the wireless access point 122 and transmit to the location server 300. In step 420, the location server 300 may be operable to utilize the refined server-assisted location of the wireless access point 122 to update the reference database 304. The exemplary steps may end in step 422.

In step 414, in instances where the map-assisted location and the server-assisted location for the wireless access point may be consistent, then in step 424, the mobile device 200 may utilize either the map-assisted location or the server-assisted location as a valid location for the wireless access point 122. The exemplary steps return to the step 402.

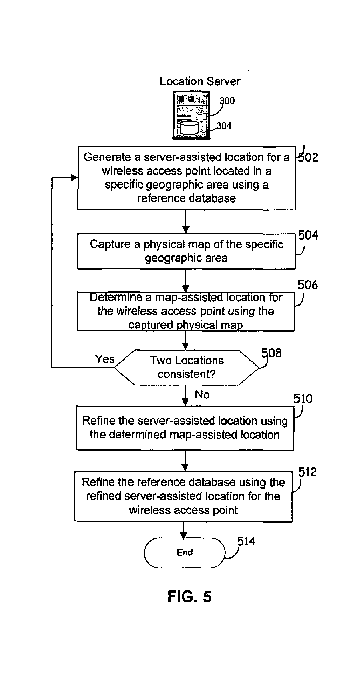

FIG. 5 is a flow chart illustrating an exemplary procedure that is utilized by a location server to refine a server-assisted location of a wireless access point utilizing a physical map or image, in accordance with an embodiment of the invention. Referring to FIG. 5, the exemplary steps may start with step 502. In step 502, the location server 300 may be operable to generate a server-assisted location for a wireless access point such as the wireless access point 122, which is located in a specific geographic area, using the reference database 304. In step 504, the location server 300 may capture or access a physical map of the specific geographic area, for example, the physical map or image 140. In step 506, the location server 300 may be operable to determine a map-assisted location for the wireless access point 122 using the physical map or image 140. In step 508, the location server 300 may determine whether the map-assisted location and the server-assisted location are consistent. In instances where the map-assisted location and the server-assisted location for the wireless access point 122 are not consistent, then in step 510, the location server 300 may refine the server-assisted location using the map-assisted location for the wireless access point 122 and/or other related information such as, for example, knowledge of a recent encountered geographic area for the wireless access point 122. In step 512, the location server 300 may be operable to utilize the refined server-assisted location of the wireless access point 122 to update the reference database 304. The exemplary steps may end in step 514.

In step 508, in instances where the map-assisted location and the server-assisted location for the wireless access point 122 are consistent, then the exemplary steps may return to step 502.

In various exemplary aspects of the method and system for physical map-assisted wireless access point locating, a mobile device such as the mobile device 200 may be operable to receive a server-assisted location for a wireless access point of interest, for example, the wireless access point 122, from a remote location server such as the location server 300. The location server 300 comprises the reference database 304 to track location information of associated communication devices such as the wireless access point 122. The mobile device 200 may be configured to refine the received server-assisted location for the wireless access point 122 using a physical map or image such as the physical map or image 140. The wireless access point 122 may be operable to connect the mobile device 200 with the Internet 130 using WiFi or Bluetooth technologies. In this regard, the mobile device 200 may be operable to acquire the physical map or image 140 using, for example, IMS, provided by the Internet 130 for a map-assisted location for the wireless access point 122. A valid location for the wireless access point 122 may be generated based on the received server-assisted location and the map-assisted location. The mobile device 200 may be operable to compare the map-assisted location with received server-assisted location for consistency check. In instances where the received server-assisted location is consistent with the map-assisted location for the wireless access point 122, the mobile device 200 may be operable to select either the received server-assisted location or the map-assisted location as the valid location for the wireless access point 122. Otherwise, the mobile device 200 may be configured to refine the server-assisted location utilizing the map-assisted location. The resulting refined server-assisted location may be utilized as the valid location for the wireless access point 122. In addition, the mobile device 200 may be operable to transmit the refined server-assisted location for the wireless access point 122 to the location server 300 so as to refine or update location information of the wireless access point 122 in the reference database 304.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for physical map-assisted wireless access point locating.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a mobile device:
receiving a server-assisted location for a wireless access point from a remote location server comprising a reference database; and
refining said received server-assisted location for said wireless access point utilizing a physical map or image.

2. The method according to claim 1, wherein said wireless access point is a WiFi access point or a Bluetooth access point.

3. The method according to claim 1, comprising acquiring said physical map or image for a map-assisted location for said wireless access point.

4. The method according to claim 3, comprising generating a valid location for said wireless access point based on said received server-assisted location and said map-assisted location.

5. The method according to claim 4, comprising comparing said map-assisted location with said received server-assisted location for said generation.

6. The method according to claim 5, wherein said server-assisted location or said map-assisted location is utilized as said valid location for said wireless access point based on said comparison.

7. The method according to claim 5, comprising refining said received server-assisted location utilizing said acquired map-assisted location for said wireless access point based on said comparison.

8. The method according to claim 7, wherein said refined server-assisted location is utilized as said valid location for said wireless access point.

9. The method according to claim 7, comprising transmitting said refined server-assisted location for said wireless access point to said remote location server.

10. The method according to claim 9, wherein said remote location server updates said reference database utilizing said received refined server-assisted location for said wireless access point.

11. A system for communication, the system comprising:
one or more processors and/or circuits for use in a mobile device, said one or more processors and/or circuits being operable to:
receive a server-assisted location for a wireless access point from a remote location server comprising a reference database; and
refine said received server-assisted location for said wireless access point utilizing a physical map or image.

12. The system according to claim 11, wherein said wireless access point is a WiFi access point or a Bluetooth access point.

13. The system according to claim 11, wherein said one or more processors and/or circuits are operable to acquire said physical map or image for a map-assisted location for said wireless access point

14. The system according to claim 13, wherein said one or more processors and/or circuits are operable to generate a valid location for said wireless access point based on said received server-assisted location and said map-assisted location.

15. The system according to claim 14, wherein said one or more processors and/or circuits are operable to compare said map-assisted location with said received server-assisted location for said generation.
